# EUROPEAN PATENT SPECIFICATION

(11) **EP 3 418 119 B1**
(45) Date of publication and mention of the grant of the patent: **29.07.2020**
(21) Application number: 17176962.3
(22) Date of filing: 20.06.2017
(51) Int. Cl.: B60Q 1/00, F21S 41/19, F21S 41/147

(54) **LIGHTING DEVICE FOR VEHICLES PROVIDED WITH LED LIGHTING MODULES**
BELEUCHTUNGSVORRICHTUNG FÜR MIT LED-BELEUCHTUNGSMODULEN AUSGESTATTETE FAHRZEUGE
DISPOSITIF D'ÉCLAIRAGE POUR VÉHICULES POURVUS DE MODULES D'ÉCLAIRAGE À DEL

(43) Date of publication of application: 26.12.2018
(73) Proprietor: Marelli Automotive Lighting Italy S.p.A., 10078 Venaria Reale (TO) (IT); PSA Automobiles SA, 78300 Poissy (FR)
(72) Inventor: RODRIGUEZ ORTEGA, Pablo, 10078 Venaria Reale (IT); RENARD, Stephanie, 10078 Venaria Reale (IT); ZATTONI, Sergio, 10078 Venaria Reale (IT); BORE, Michael, 78140 Velizy Villacoublay (FR); LE DALL, Christophe, 78140 Velizy Villacoublay (FR); GONCALVES, Whilk Marcelino, 78140 Velizy Villacoublay (FR)
(74) Representative: Plebani, Rinaldo

(56) References cited:
- EP-A1- 3 176 493

## Description

### Technical field of the invention

The present invention relates to a lighting device equipped with a plurality of lighting modules using LEDs as a light source and having rotation capabilities in order to provide selectively more than one optical functions, like signaling functions as position light, direction light, welcome light, DRL (Daytime Running Light), and/or lighting functions like a forward low beam (cross beam) or fog beam eventually provided with advanced adaptive functions like AFS (Adaptive Function System) and DBL (Dynamic Bending Light) .

### Technical Background

Lighting devices for vehicles provided with rotating LED lighting modules are known in the art.

For example, EP2902701 discloses a device wherein a lighting module comprises a light source and at least one reflector and wherein the reflector is motorized and the light source is a LED; the reflector consists of a rotating support having two opposite faces, one constituting the reflector and the other realizing a second function, e.g. an aspect function; a fixed motor rotates the support with respect to the fixed LED light source in order to bring selectively the two faces on the front side of the device facing toward the direction of motion of the vehicle; the support also bears at its opposite faces two light guides operatively associated with a second LED.

Frontal lighting devices for vehicles as headlamps, including a plurality of rotating lighting modules like that one of EP2902701 may be very expensive to be produced, since the lighting modules cannot be merely arranged side by side but, other than to be combined in the required manner in their photometric performances, have to follow the outer profile of the lighting device, which is usually curved and/or tapered, since it has to follow the profile of the body of the vehicle. Accordingly, the rotating modules are to be at least slightly different to each other, at least in some components thereof, and especially in the printed circuit board that bears the LEDs. The printed circuit board or, shortly, "PCB" is normally the most expensive part of the module and in this manner cannot be standardized, with cost increase. Moreover, the assembly costs and the possible assembly errors may increase too.

Document EP 3 176 493 A1 discloses a lighting device according to the preamble of claim 1.

### Summary of the invention

The object of the present invention is to provide a lighting device for vehicles including a plurality of rotating lighting modules using LEDs as the light source that is compact, simple and cost-effective in construction and highly reliable, other than providing a required combined photometric performance.

According to the invention, therefore, a lighting device for vehicles including a plurality of rotating lighting modules is provided having the features set out in the appended claims.

### Brief description of the drawings

Further features and advantages of the present invention will become more apparent from the following description of one non-limiting embodiment thereof, made with reference to the figures in the accompanying drawings, in which:
- figure 1 shows schematically a perspective view taken three quarter from the front of a lighting device according to the invention, comprising three rotating lighting modules;
- figure 2 shows schematically and in an enlarged scale a plan view from the bottom of the lighting device of figure 1 with parts removed to show an essential component of the lighting modules thereof; and
- figure 3 shown in a further enlarged scale a plane view from the bottom of the same essential component of the lighting modules as shown in figure 2.

### Detailed description

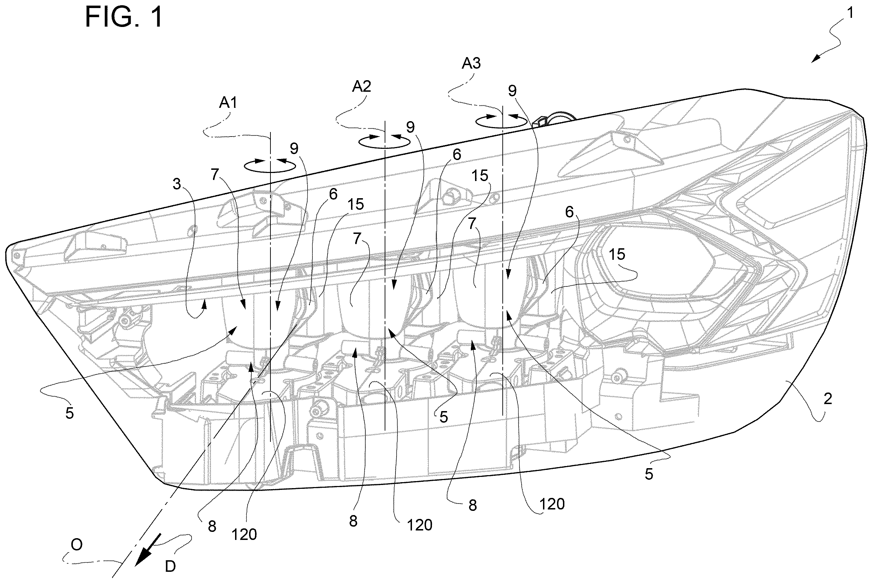

With reference to figure 1, reference numeral 1 indicates as a whole a lighting device consisting, in the non-limiting embodiment shown, in a vehicle headlight. It is however to be intended that what will be described can be applied to any vehicle lighting device equipped with rotating lighting modules. The lighting device 1 is configured for generating a given light rays distribution along an optical axis 0 (figure 1) in use generally aligned with a forward or rearward march direction D of the vehicle, indicated in figures 1 and by an arrow.

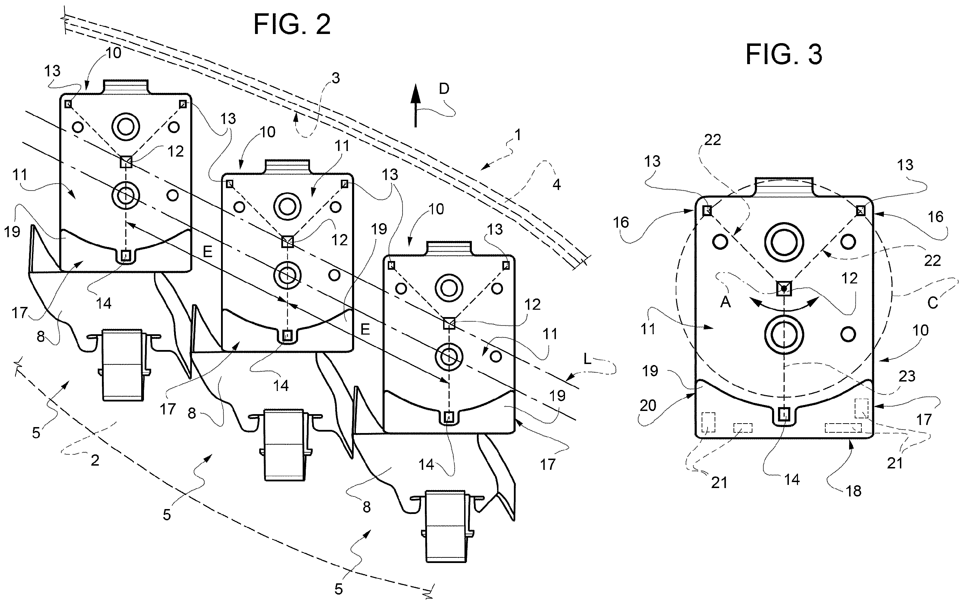

The lighting device 1 comprises a generally cup-shaped housing 2 designed to be mounted on a vehicle, known and not shown for sake of simplicity. Housing 2 is made of synthetic plastic material by injection molding and has a front inlet opening 3 in use facing opposite to the vehicle and along the direction D (in the example shown the forward driving direction D of the vehicle); the inlet opening 3 is normally closed by a transparent cover 4, known and shown only schematically and with dotted lines in figure 2, for sake of simplicity .

According to one aspect of the present invention, housing 2 carries at the interior thereof a plurality (e.g. two or more) of rotating lighting modules 5, in the example shown three lighting modules 5, arranged side by side in front of the inlet opening 3 and along a curved profile thereof, facing in the direction of the optical axis 0.

Each lighting module 5 is *per se* well known and comprises a rear reflector 6 and a front optical lens 7, which are integrally connected to each other to form a rotating functional optical unit 9 borne by a support 8 mounted in a fixed position within the housing 2; in particular, each optical unit 9 is supported in a mobile manner, namely rotating around a its own pivoting axis A, by the support 8 so that each optical unit 9 is arranged to rotate around the axis A on the support 8, which mounted in a fixed position within the housing 2, integral rigid therewith.

Each lighting module 5 further comprises a printed circuit board 10 bearing plurality of independently switchable LEDs arranged on a lower surface 11 thereof and operationally associated with the rotating optical unit 9 to provide a plurality of different light ray distributions, generally known and not shown for sake of simplicity, in the direction of the optical axis 0.

The lighting device 1 further comprises at least one actuating motor 120 to rotate one or more (e.g. all) of the rotating optical units 9 to a prefixed extent; in the example shown, each lighting module 5 possesses its own motor 120 to rotate each optical unit 9 independently of one another.

According to what described in a pending patent application in the name of the same applicants, each printed circuit board 10 of each lighting module 5 bears four LEDs, namely (figures 2 and 3) :
- a first LED 12 configured to generate, together with the respective rotating optical unit 9, a main beam (known and not shown for sake of simplicity) e.g. a forward cross-beam or a fog-beam having, owing to the rotation of the optical unit 9 around its pivoting axis A, adaptive functions;
- a pair of second LEDs 13 configured to generate, together with the rotating optical unit 9, a signaling function, e.g. position light, direction light or DRL; and
- at least a third LED 14, operatively associated for each said lighting module 5 to a respective fixed reflector 15 of the lighting module 5 borne rigidly by the support 8.

Each fixed reflector 15 (figure 1) is part of one respective lighting module 5 and the third LED 14 of each lighting module 5 is configured to generate, together with the fixed reflector 15 of the same module 5, a further signaling light, in particular a welcome light. Each fixed reflector 15 is arranged within the cup-shaped housing 2 behind the respective rotating optical unit 9 of the same lighting module 5 and opposite to the inlet opening 3.

According to the main aspect of the invention the lighting modules 5 are identical to each other in all their components; moreover, though the lighting device 1 shown in figures 1 and 2 is designed to be assembled on the left side of a vehicle, its lighting modules 5 may be indifferently assembled also on a different lighting device (not shown) designed to be assembled on the right side of the same vehicle and which is therefore specular symmetrical to the lighting module 1 of figure 1: accordingly, a vehicle can be fully equipped, according to the example shown, with six lighting modules 5 all identical to each other. The same is true, at it will be seen, for a different number of lighting modules 5 involved, e.g. two or four or more for each lighting device 1, right or left mounted.

The above very important feature, that allows dramatic scale economies to be obtained and to make easier the assembly of the lighting devices 1 can be obtained by selecting certain specific features for the printed circuit boards 10, which are also all identical to each other for all the modules 5, and the respective LEDs 12-14 borne thereby.

First of all, the printed circuit board 10 of each rotating lighting module 5 has in a plan view a substantially rectangular shape; secondly, the first LED 12 is arranged on the printed circuit board lower face 11 at the pivoting axis A of the respective rotating optical unit 9 and at a longitudinal center line of the printed circuit board 10, which center line is arranged parallel to the optical axis 0 when the optical unit 9 is not rotated.

Accordingly, the optical unit 9 of each lighting module 5 rotates around a respective pivoting axis, indicated for the three different lighting modules 5 of the lighting device 1 as A1, A2 and A3 respectively in figure 1; and, according to one main feature of the invention, the printed circuit board 10 of each module 5 is arranged on the fixed support 8 such as to have its LED 12 arranged coaxial with the respective pivoting axis A1, A2 or A3.

Moreover, as a further main feature of the invention, the second LEDs 13 are arranged at respective forward corners 16 (figure 3) of the printed circuit board 10 facing the inlet opening 3 of the housing 2 and, moreover, at positions substantially tangent to, or placed upon an ideal circumference C (shown in figure 3 in dotted lines) having its center at the pivoting axis A (namely at A1, A2, A3 respectively for each module 5) of the respective optical unit 9, i.e. concentric and coaxial with the respective axis A1, A2 or A3.

As a further feature of the present invention, in combination with what described above, the at least third LED 14 of each module 5 is arranged on the printed circuit board lower face 11 at the longitudinal center line of the printed circuit board 10 (like the LED 12) but at a rear portion 17 of the printed circuit board 10, opposite to the forward corners 16.

The third LED 14 is moreover arranged at, or immediately circumscribed to, the circumference C having center at the pivoting axis A of the respective optical unit 9, namely A1, A2 or A3; in any case, the third LED 14 has to be closer to circumference C than to a rear edge 18 of the printed circuit board 10 (figure 3) delimiting the rear portion 17 thereof opposite to the forward corners 16.

According to a further feature of the invention, the third LED 14 is surrounded by a metallic, electrically and thermally conductive foil 19 covering the lower face 11 of the printed circuit board 10 on the whole rear portion 17 thereof except that occupied by, and immediately surrounding to, the third LED 14.

The metallic foil 19 is configured to act as a thermal dissipator, and the rear portion 17 of the printed circuit board 10 bears on an upper surface 20 thereof (figure 3), opposite to the lower surface 11, electronic components 21, known, of the respective optical unit 9; the electronic components 21 are arranged in thermal contact with the metallic foil 19.

The printed circuit boards 10 of all the rotating lighting modules 5 of the lighting device 1 are identical to each other and are stationary, being held rigid with the support 8. Moreover, the printed circuit boards 10 of all the rotating lighting modules 5 of the lighting device 1 are arranged along a diagonal line L (figure 2) forming in use an angle less than 90° with the forward or rearward march direction D of the vehicle; the diagonal line L is substantially parallel to the inlet opening 3 and along it the printed circuit boards 10 of all the lighting modules 5 are spaced apart to one another of the same extent E measured along the diagonal line L; moreover, the printed circuit boards 10 are arranged such as to have the first LEDs 12 crossed by the diagonal line L (figure 2), so as that all the first LEDs 12 are aligned along the diagonal line L.

As a further feature of the invention, the first, second and third LEDs 12-14 borne by each printed circuit board 10 are arranged, in a plane parallel to the lower surface 11, such that to define a "Y" (shown in dotted lines in figures 2 and 3), wherein the pair of second LEDs 13 occupy respective farthest ends of respective upper branches 22 of the "Y", the third LED 14 occupies a farthest end of a lower branch 23 of the "Y" and the first LED 12 occupies a center position of the "Y" wherein the upper and lower branches 22,23 join.

It stems from what described above that the invention aldo relates to a vehicle (any known vehicle, not shown for simplicity) provided with a pair of specular symmetrical lighting devices 1 each as described, wherein all the printed circuit boards 10 of the rotating lighting modules 5 of both the lighting devices 1 are identical to each other.

All the aims of the invention are therefore accomplished.

## Claims

1. A lighting device (1) for a vehicle, such as a headlight or a headlamp, for generating a given light rays distribution along an optical axis (0) in use generally aligned with a forward or rearward march direction (D) of the vehicle, the lighting device (1) comprising a cup-shaped housing (2) designed to be mounted on a vehicle body and a plurality of rotating lighting modules (5) arranged within the cup-shaped housing (2) and each comprising an optical unit (9) borne by a support (8) and arranged to rotate around a its own pivoting axis (A) and a printed circuit board (10) bearing, on a lower face (11) thereof, at least: a first LED (12) configured to generate, together with the rotating optical unit, a main beam; and a pair of second LEDs (13) configured to generate, together with the rotating optical unit, a signaling function; said LEDs (12,13) being operationally associated with the rotating optical unit (9); wherein:
i)- the printed circuit board (10) of each rotating lighting module (5) has in a plan view a substantially rectangular shape;
ii)- the first LED (12) is arranged on the printed circuit board lower face (11) at the pivoting axis (A) of the respective rotating optical unit and at a longitudinal center line of the printed circuit board (10) arranged parallel to the optical axis (0) when the optical unit is not rotated;
iii)- the second LEDs (13) are arranged at respective forward corners (16) on the printed circuit board facing an inlet opening (3) of the housing and at positions substantially tangent to, or placed upon, a circumference (C) having center at the pivoting axis (A) of the respective optical unit;
- the plurality of rotating lighting modules (5) being arranged within the cup-shaped housing (2) in front of the inlet opening (3) thereof facing in the direction of the optical axis;
- the support (8) being mounted in a fixed position within the housing (2);
- said printed circuit board (10) bearing said first and second LEDs also bearing at least a third LED , all said LEDs (12,13,14) being independently switchable;
- the lighting device (1) further comprising at least one actuating motor (120) to rotate one or more of the rotating optical units to a prefixed extent;
- said first LED (12) being configured to generate, together with the rotating optical unit, a main beam having adaptive functions selected in the group consisting in: a forward cross-beam, a fog-beam;
- said pair of second LEDs (13) being configured to generate, together with the rotating optical unit, a signaling function selected in the group consisting in: position light, direction light, DRL; and
- said at least a third LED (14) being configured to generate, together with a fixed reflector (15) arranged within the cup-shaped housing (2), a further signaling light, e.g. a welcome light, the fixed reflector (15) being arranged behind the respective rotating optical unit (9) and opposite to the inlet opening (3); **characterized in that,** in combination the at least a third LED (14) is arranged on the printed circuit board lower face (11) at the longitudinal center line of the printed circuit board and at a rear portion (17) of the printed circuit board opposite to said forward corners (16), the third LED being arranged at, or immediately circumscribed to, said circumference (C) having center at the pivoting axis (A) of the respective optical unit; the said third LED (14) being closer to said circumference than to a rear edge (18) of the printed circuit board delimiting the rear portion thereof opposite to said forward corners.

2. A lighting device according to claim 1, **characterized in that** said first, second and third LEDs (12-14) borne by each said printed circuit board (10) are arranged in a plane parallel to the lower face such that to define a "Y", wherein the pair of second LEDs (13) occupy respective farthest ends of respective upper branches (22) of the "Y", the third LED occupies a farthest end of a lower branch (23) of the "Y" and the first LED occupies a center position of the "Y" wherein the upper and lower branches (22, 23) join.

3. A lighting device according to claim 1, **characterized in that** said third LED (14) is surrounded by a metallic, electrically and thermally conductive foil (19) covering the lower face (11) of the printed circuit board on the whole said rear portion (17) thereof except that occupied by, and immediately surrounding to, the third LED (14); said metallic foil (19) being configured to act as a thermal dissipator, the rear portion of the printed circuit board bearing on an upper surface (20) thereof opposite to said lower surface electronic components (21) of the respective optical unit (9) in thermal contact with said metallic foil.

4. A lighting device according to anyone of the foregoing claims, **characterized in that** the printed circuit boards (10) of all the rotating lighting modules (5) of the lighting device are identical to each other.

5. A lighting device according to claim 4, **characterized in that** the printed circuit boards (10) of all the rotating lighting modules (5) of the lighting device are stationary, being held rigid with the support (8).

6. A lighting device according to anyone of the foregoing claims, **characterized in that** the printed circuit boards (10) of all the rotating lighting modules (5) of the lighting device are arranged along a diagonal line (L) forming in use an angle less than 90° with the forward or rearward march direction (D) of the vehicle; said diagonal line (L) being substantially parallel to said inlet opening (3); said printed circuit boards (10) of all the lighting modules being spaced apart to one another of the same extent measured along said diagonal line (L) and having the first LED (12) crossed by said diagonal line (L) so as that all the first LEDs are aligned along the diagonal line.

7. A lighting device according to anyone of the foregoing claims, **characterized in that** each said optical unit (9) comprises a rear reflector (6) and a front optical lens (7), which are integrally connected to each other to form a functional rotating unit.

8. Vehicle provided with a pair of specular symmetrical lighting devices (1) each according to anyone of the foregoing claims, wherein all the printed circuit boards (10) of the rotating lighting modules (5) of both the lighting devices (1) are identical to each other.

## Patentansprüche

1. Beleuchtungsvorrichtung (1) für ein Fahrzeug, wie etwa ein Scheinwerfer oder ein Frontscheinwerfer, zum Erzeugen einer gegebenen Lichtstrahlverteilung entlang einer optischen Achse (O), die im Betrieb allgemein mit einer Vorwärts- oder Rückwärts-Fahrtrichtung (D) des Fahrzeugs ausgerichtet ist, welche Beleuchtungsvorrichtung (1) ein becherförmiges Gehäuse (2), das zur Anbringung an einer Fahrzeugkarosserie konstruiert ist, sowie eine Vielzahl von drehbaren Beleuchtungsmodulen (5) aufweist, die innerhalb des becherförmigen Gehäuses (2) angeordnet sind und jeweils eine optische Einheit (9), die von einer Halterung (8) getragen ist und so angeordnet ist, dass sie sich um ihre eigene Drehachse (A) drehen kann, und eine Platine (10) aufweisen, die an ihrer Unterseite (11) zumindest eine erste LED (12), die dafür konfiguriert ist, zusammen mit der drehbaren optischen Einheit einen Hauptstrahl zu erzeugen; und ein Paar zweiter LEDs (13), die dafür konfiguriert sind, zusammen mit der drehbaren optischen Einheit eine Signalisierungsfunktion zu erzeugen, trägt; wobei die LEDs (12, 13) der drehbaren optischen Einheit (9) funktionell zugehörig sind, wobei:
i)- die Platine (10) jedes drehbaren Beleuchtungsmoduls (5) in der Draufsicht eine im Wesentlichen rechteckige Form hat;
ii)- die erste LED (12) an der Unterseite (11) der Platine an der Drehachse (A) der jeweiligen drehbaren optischen Einheit und an einer Längsmittellinie der Platine (10) angeordnet ist, die parallel zu der optischen Achse (O) angeordnet ist, wenn die optische Einheit nicht dreht;
iii)- die zweiten LEDs (13) an jeweiligen vorderen Ecken (16) auf der Platine, einer Einlassöffnung (3) des Gehäuses gegenüberliegend, und an Positionen angeordnet sind, die im Wesentlichen einen Umfang (C) berühren oder auf diesem angeordnet sind, dessen Mittelpunkt an der Drehachse (A) der jeweiligen optischen Einheit liegt;
- wobei die Vielzahl der drehbaren Beleuchtungsmodule (5) innerhalb des becherförmigen Gehäuses (2) vor dessen Einlassöffnung in Richtung der optischen Achse weisend angeordnet ist;
- wobei die Halterung (8) an einer feststehenden Position innerhalb des Gehäuses (2) angebracht ist;
- wobei die Platine (10), die die erste und die zweiten LEDs trägt, auch zumindest eine dritte LED trägt, wobei alle LEDs (12, 13, 14) unabhängig schaltbar sind;
- wobei die Beleuchtungsvorrichtung (1) ferner mindestens einen Betätigungsmotor (120) aufweist, um eine oder mehrere der drehbaren optischen Einheiten in einem vorher festgelegten Ausmaß zu drehen;
- wobei die erste LED (12) dafür konfiguriert ist, zusammen mit der drehbaren optischen Einheit einen Hauptstrahl zu erzeugen, der adaptive Funktionen hat, die ausgewählt sind aus der Gruppe bestehend aus einem vorderen Querstrahl, einem Nebelstrahl;
- wobei das Paar zweiter LEDs (13) dafür konfiguriert ist, zusammen mit der drehbaren optischen Einheit eine Signalisierungsfunktion zu erzeugen, die ausgewählt ist aus der Gruppe bestehend aus einem Positionslicht, einem Richtungsanzeiger, einem Tagfahrlicht; und
- wobei die mindestens eine dritte LED (14) dafür konfiguriert ist, zusammen mit einem innerhalb des becherförmigen Gehäuses (2) angeordneten feststehenden Reflektor (15) ein weiteres Signalisierungslicht zu erzeugen, beispielsweise ein Begrüßungslicht, wobei der feststehende Reflektor (15) hinter der jeweiligen drehbaren optischen Einheit (9) und gegenüber der Einlassöffnung (3) angeordnet ist;
**dadurch gekennzeichnet, dass** in Kombination die mindestens eine dritte LED (14) an der Unterseite (11) der Platine an der Längsmittellinie der Platine und in einem hinteren Teil (17) der Platine gegenüber den vorderen Ecken (16) angeordnet ist, wobei die dritte LED an dem oder am unmittelbaren Umkreis des Umfangs (C) mit dem Mittelpunkt an der Drehachse (A) der jeweiligen optischen Einheit angeordnet ist; wobei die dritte LED (14) näher am Umfang als an einem hinteren Rand (18) der Platine angeordnet ist, der ihren hinteren Teil gegenüber den vorderen Ecken begrenzt.

2. Beleuchtungsvorrichtung nach Anspruch 1, **dadurch gekennzeichnet, dass** die erste, die zweite und die dritte LED (12-14), die von der jeweiligen Platine (10) getragen werden, in einer zu der Unterseite parallelen Ebene angeordnet sind, sodass sie ein "Y" bilden, wobei das Paar der zweiten LEDs (13) die jeweiligen entferntesten Enden der jeweiligen oberen Zweige (22) des "Y" einnimmt, die dritte LED ein am weitesten entferntes Ende eines unteren Zweiges (23) des "Y" einnimmt und die erste LED eine Mittenposition des "Y" einnimmt, wo sich die oberen und unteren Zweige (22, 23) verbinden.

3. Beleuchtungsvorrichtung nach Anspruch 1, **dadurch gekennzeichnet, dass** die dritte LED (14) von einer metallischen, elektrisch und thermisch leitfähigen Folie (19) umgeben ist, die die Unterseite (11) der Platine in ihrem gesamten hinteren Teil (17) mit Ausnahme des von der dritten LED (14) eingenommenen und diese unmittelbar umgebenden Teils bedeckt; wobei die Metallfolie (19) so konfiguriert ist, dass sie als Wärmeverteiler dient, wobei der hintere Teil der Platine, der auf seiner Oberfläche (20), der unteren Fläche gegenüberliegend, elektronische Bauteile (21) der jeweiligen optischen Einheit (9) in thermischem Kontakt mit der Metallfolie trägt.

4. Beleuchtungsvorrichtung nach einem der vorstehenden Ansprüche, **dadurch gekennzeichnet, dass** die Platinen (10) aller drehbaren Beleuchtungsmodule (5) der Beleuchtungsvorrichtung miteinander identisch sind.

5. Beleuchtungsvorrichtung nach Anspruch 4, **dadurch gekennzeichnet, dass** die Platinen (10) aller drehbaren Beleuchtungsmodule (5) der Beleuchtungsvorrichtung feststehend sind und starr mit der Halterung (8) gehalten werden.

6. Beleuchtungsvorrichtung nach einem der vorstehenden Ansprüche, **dadurch gekennzeichnet, dass** die Platinen (10) aller drehbaren Beleuchtungsmodule (5) der Beleuchtungsvorrichtung entlang einer diagonalen Linie (L) angeordnet sind, die im Betrieb einen Winkel von weniger als 90° mit einer Vorwärts- oder Rückwärts-Fahrtrichtung (D) des Fahrzeugs bildet; wobei die diagonale Linie (L) im Wesentlichen parallel zu der Einlassöffnung (3) ist; wobei die Platinen (10) aller Beleuchtungsmodule im selben Ausmaß, gemessen entlang der diagonalen Linie (L), voneinander beanstandet sind und die erste LED (12) von der diagonalen Linie (L) gekreuzt wird, sodass alle ersten LEDs entlang der diagonalen Linie ausgerichtet sind.

7. Beleuchtungsvorrichtung nach einem der vorstehenden Ansprüche, **dadurch gekennzeichnet, dass** jede optische Einheit (9) einen hinteren Reflektor (6) und eine vordere optische Linse (7) aufweist, die miteinander einstückig verbunden sind, sodass sie eine funktionelle drehbare Einheit bilden.

8. Fahrzeug, versehen mit einem Paar spiegelsymmetrischer Beleuchtungsvorrichtungen (1) jeweils nach einem der vorstehenden Ansprüche, wobei alle Platinen (10) der drehbaren Beleuchtungsmodule (5) der beiden Beleuchtungsvorrichtungen (1) miteinander identisch sind.

## Revendications

1. Dispositif d'éclairage (1) pour un véhicule, tel qu'un phare, pour générer une distribution de rayons lumineux donnée le long d'un axe optique (O) lors de l'utilisation globalement aligné sur une direction de marche vers l'avant ou vers l'arrière (D) du véhicule, le dispositif d'éclairage (1) comprenant un boîtier en forme de coupe (2) conçu pour être monté sur une caisse de véhicule et une pluralité de modules d'éclairage rotatifs (5) agencés dans le boîtier en forme de coupe (2) et comprenant chacun une unité optique (9) portée par un support (8) et agencée pour tourner autour de son propre axe de pivotement (A) et une carte de circuit imprimé (10) portant, sur une face inférieure de celle-ci, au moins : une première LED (12) configurée pour générer, avec l'unité optique rotative, un faisceau principal ; et une paire de deuxièmes LED (13) configurées pour générer, avec l'unité optique rotative, une fonction de signalisation ; lesdites LED (12, 13) étant fonctionnellement associées à l'unité optique rotative (9) ; dans lequel :
i)- la carte de circuit imprimé (10) de chaque module d'éclairage rotatif (5) présente dans une vue en plan une forme sensiblement rectangulaire ;
ii)- la première LED (12) est agencée sur la face inférieure de carte de circuit imprimé (11) au niveau de l'axe de pivotement (A) de l'unité optique rotative respective et au niveau d'une ligne centrale longitudinale de la carte de circuit imprimé (10) agencée parallèlement à l'axe optique (O) quand l'unité optique ne tourne pas ;
iii)- les deuxièmes LED (13) sont agencées au niveau de coins avant (16) respectifs sur la carte de circuit imprimé faisant face à une ouverture d'entrée (3) du boîtier et dans des positions sensiblement tangentes à, ou placées sur, une circonférence (C) présentant un centre au niveau de l'axe de pivotement (A) de l'unité optique respective ;
- la pluralité de modules d'éclairage rotatifs (5) étant agencés dans le boîtier en forme de coupe (2) devant l'ouverture d'entrée (3) de celui-ci faisant face à la direction de l'axe optique ;
- le support (8) étant monté dans une position fixe dans le boîtier (2) ;
- ladite carte de circuit imprimé (10), portant ladite première et deuxièmes LED, portant également au moins une troisième LED, toutes lesdites LED (12, 13, 14) pouvant être commutées indépendamment ;
- le dispositif d'éclairage (1) comprenant en outre au moins un moteur d'actionnement (120) pour faire tourner une ou plusieurs des unités optiques rotatives dans une mesure préfixée ;
- ladite première LED (12) étant configurée pour générer, avec l'unité optique rotative, un faisceau principal présentant des fonctions adaptatives sélectionnées dans le groupe constitué de : un faisceau traversant avant, un faisceau anti-brouillard ;
- ladite paire de deuxièmes LED (13) étant configurées pour générer, avec l'unité optique rotative, une fonction de signalisation sélectionnée dans le groupe constitué de : feu de position, feu de direction, DRL ; et
- ladite au moins une troisième LED (14) étant configurée pour générer, avec un réflecteur fixe (15) agencé dans le boîtier en forme de coupe (2), un autre feu de signalisation, par exemple, un feu de bienvenue, le réflecteur fixe (15) étant agencé derrière l'unité optique rotative (9) respective et à l'opposé de l'ouverture d'entrée (3) ; **caractérisé en ce que,** en combinaison l'au moins une troisième LED (14) est agencée sur la face inférieure de carte de circuit imprimé (11) au niveau de la ligne centrale longitudinale de la carte de circuit imprimé et au niveau d'une partie arrière (17) de la carte de circuit imprimé à l'opposé desdits coins avant (16), la troisième LED étant agencée au niveau de, ou immédiatement circonscrite à, ladite circonférence (C) présentant un centre au niveau de l'axe de pivotement (A) de l'unité optique respective ; ladite troisième LED (14) étant plus proche de ladite circonférence que d'un bord arrière (18) de la carte de circuit imprimé délimitant la partie arrière de celle-ci à l'opposé desdits coins avant.

2. Dispositif d'éclairage selon la revendication 1, **caractérisé en ce que** lesdites première, deuxièmes et troisième LED (12-14) portées par chaque dite carte de circuit imprimé (10) sont agencées dans un plan parallèle à la face inférieure de manière à définir un « Y », dans lequel la paire de deuxièmes LED (13) occupent des extrémités les plus éloignées respectives de branches supérieures (22) respectives du « Y », la troisième LED occupe une extrémité la plus éloignée d'une branche inférieure (23) du « Y » et la première LED occupe une position centrale du « Y » dans laquelle les branches supérieure et inférieure (22, 23) se rejoignent.

3. Dispositif d'éclairage selon la revendication 1, **caractérisé en ce que** ladite troisième LED (14) est entourée d'une feuille métallique électriquement et thermiquement conductrice (19) recouvrant la face inférieure (11) de la carte de circuit imprimé sur la totalité de ladite partie arrière (17) de celle-ci à l'exception de celle occupée par la troisième LED (14), et entourant immédiatement celle-ci ; ladite feuille métallique (19) étant configurée pour servir de dissipateur thermique, la partie arrière de la carte de circuit imprimé portant sur une surface supérieure (20) de celle-ci opposée à ladite surface inférieure des composants électroniques (21) de l'unité optique (9) respective en contact thermique avec ladite feuille métallique.

4. Dispositif d'éclairage selon l'une quelconque des revendications précédentes, **caractérisé en ce que** les cartes de circuit imprimé (10) de tous les modules d'éclairage rotatifs (5) du dispositif d'éclairage sont identiques entre elles.

5. Dispositif d'éclairage selon la revendication 4, **caractérisé en ce que** les cartes de circuit imprimé (10) de tous les modules d'éclairage rotatifs (5) du dispositif d'éclairage sont fixes, étant solidement maintenues avec le support (8).

6. Dispositif d'éclairage selon l'une quelconque des revendications précédentes, **caractérisé en ce que** les cartes de circuit imprimé (10) de tous les modules d'éclairage rotatifs (5) du dispositif d'éclairage sont agencées le long d'une ligne diagonale (L) formant lors de l'utilisation un angle de moins de 90° avec la direction de marche vers l'avant ou vers l'arrière (D) du véhicule ; ladite ligne diagonale (L) étant sensiblement parallèle à ladite ouverture d'entrée (3) ; lesdites cartes de circuit imprimé (10) de tous les modules d'éclairage étant espacées les unes des autres de la même étendue mesurée le long de ladite ligne diagonale (L) et comportant la première LED (12) croisée par ladite ligne diagonale (L) de telle sorte que toutes les premières LED sont alignées le long de la ligne diagonale.

7. Dispositif d'éclairage selon l'une quelconque des revendications précédentes, **caractérisé en ce que** chaque dite unité optique (9) comprend un réflecteur arrière (6) et une lentille optique avant (7), qui sont reliés d'un seul tenant l'un à l'autre pour former une unité rotative fonctionnelle.

8. Véhicule pourvu d'une paire de dispositifs d'éclairage symétriques spéculaires (1) chacun selon l'une quelconque des revendications précédentes, dans lequel toutes les cartes de circuit imprimé (10) des modules d'éclairage rotatifs (5) des deux dispositifs d'éclairage (1) sont identiques entre elles.
